# EUROPEAN PATENT APPLICATION

(11) **EP 3 501 305 A1**
(43) Date of publication of application: **26.06.2019**
(21) Application number: 17841021.3
(22) Date of filing: 14.08.2017
(51) Int. Cl.: A24F 47/00

(54) **ELECTRONIC CIGARETTE SETTING METHOD AND SYSTEM**

(30) Priority: 16.08.2016 CN 201610671757
(71) Applicant: Changzhou Jwei Intelligent Technology Co., Ltd., Changzhou, Jiangsu 213125 (CN)
(72) Inventor: QIU, Weihua, Jiangsu 213125 (CN)
(74) Representative: Zaboliene, Reda
(86) International application number: PCT/CN2017/097395
(87) International publication number: WO 2018/033049

(57) **Abstract**

A method and a system for setting up an electronic cigarette are provided. The method includes: S1, the cloud server obtaining an information in data packet from a setup information database, and sending the obtained information in data packet to the electronic cigarette; and S2, the electronic cigarette receiving the information in data packet, selecting one set of information from the information in data packet, and setting parameters of the electronic cigarette according to the selected set of information. The method obtain the information in data packet from the cloud server and automatically set up the electronic cigarette up accordingly. Thus, the setup method for the electronic cigarette is simplified. Furthermore, the cloud server can establish and extend the setup information database based on strong analysis and calculation abilities. The setup information database is capable of being updated and modified, the cloud server can send information as to updates and modifications as data packet to the cloud server in real time. Thus, the user experience can be improved

## Description

### CROSS-REFERENCE TO RELATED APPLICATIONS

### FIELD

The present disclosure relates to electronic cigarettes, and more particularly, to a system and a method for setting up an electronic cigarette.

### BACKGROUND

Electronic cigarettes can simulate tobacco smoking, and thus can be substituted for cigarettes. The electronic cigarette, which is not an open-fired smoking device, usually includes an atomizer, and a battery configured to supply electric power to the atomizer. The atomizer heats liquid nicotine or other nicotine substitutes to generate smoke that the user can inhale. When the user inhales, the controller controls the atomizer to operate.

However, there are many different types and/or models of atomizer, and the type of the battery may also be different. Therefore, a user needs to first operate and adjust the electronic cigarette to find preferred parameters of smoking. Such process may be cumbersome.

### SUMMARY

In view of the above, an objective of the present invention is to provide a method and a system for setting up electronic cigarette, to avoid the above cumbersome and complicated process when shortcomings that the user needs to set up the electronic cigarette.

According to a first aspect of the present disclosure, a method for setting up electronic cigarette is provided, the method comprising:
S1, the cloud server obtaining an information in data packet from a setup information database, and sending the obtained information in data packet to the electronic cigarette; and
S2, the electronic cigarette receiving the information in data packet, selecting one set of information from the information in data packet, and setting parameters of the electronic cigarette according to the selected set of information.

Combined with the first aspect of the preset disclosure, in a first embodiment, in S1, the cloud server sending the obtained information in data packet to the electronic cigarette comprises:
the cloud server sending the obtained information in data packet to the electronic cigarette through a mobile terminal.

Combined with the first aspect of the preset disclosure, in a second embodiment, the setup information database is established by steps comprising:
S11, the electronic cigarette recording usage habits information;
S12, the electronic cigarette sending the usage habits information to the cloud server;
S13, the cloud server receiving the usage habits information, and storing the received usage habits information to the setup information database.

Combined with the second embodiment of the first aspect of the preset disclosure, in a third embodiment, in S12, the electronic cigarette itself sends the usage habits information to the cloud server, or sends the usage habits information to the cloud server through a mobile terminal.

Combined with the first aspect of the preset disclosure, in a fourth embodiment, the setup information database is established by steps comprising:
S21, the electronic cigarette sending technical parameters stored in the electronic cigarette to the cloud server;
S22, the cloud server receiving the technical parameters of the electronic cigarette, and storing the received technical parameters of the electronic cigarette to the setup information database.

Combined with the fourth embodiment of the first aspect of the preset disclosure, in a fifth embodiment, in S21, the electronic cigarette itself sends the technical parameters to the cloud server, or sends the technical parameters to the cloud server through a mobile terminal.

According to a second aspect of the present disclosure, a system for setting up electronic cigarette is provided, comprising:
a cloud server comprising a setup information database storing an information in data packet, the cloud server configured to obtain the information in data packet from the setup information database, and send the obtained information in data packet to the electronic cigarette; and
an electronic cigarette configured to obtain the information in data packet from the cloud server, select one set of information from the information in data packet, and set parameters of the electronic cigarette according to the selected set of information.

Combined with the second aspect of the preset disclosure, in a first embodiment, the electronic cigarette further comprises a mobile terminal, the cloud server is configured to send the obtained information in data packet to the electronic cigarette through the mobile terminal.

Combined with the second aspect of the preset disclosure, in a second embodiment, the cloud server comprises a usage habits information receiving module, the electronic cigarette further comprises a usage habits information recording module and a usage habits information sending module;
the usage habits information recording module is configured to record usage habits information of a user;
the usage habits information sending module is configured to send the usage habits information recorded by the usage habits information recording module to the usage habits information receiving module;
the usage habits information receiving module is configured to receive the usage habits information from the usage habits information sending module;
the setup information database is configured to store the received usage habits information received by the usage habits information receiving module.

Combined with the second embodiment of the second aspect of the preset disclosure, in a third embodiment, the system further comprises a mobile terminal;
the usage habits information recording module is configured to record usage habits information of a user;
the usage habits information sending module is configured to send the usage habits information recorded by the usage habits information recording module to the mobile terminal;
the mobile terminal is configured to send the usage habits information sent by the usage habits information sending module to the usage habits information receiving module;
the usage habits information receiving module is configured to receive the usage habits information from the mobile terminal
the setup information database is configured to store the received usage habits information received by the usage habits information receiving module.

Combined with the second aspect of the preset disclosure, in a fourth embodiment, the cloud server further comprises a technical parameters receiving module, the electronic cigarette further comprises a technical parameters storing module and a technical parameters sending module;
the technical parameters storing module is configured to store technical parameters of the electronic cigarette;
the technical parameters sending module is configured to send the technical parameters of the electronic cigarette stored in the technical parameters storing module to the technical parameters receiving module;
the technical parameters receiving module is configured to receive the technical parameters of the electronic cigarette sent by the technical parameters sending module;
the setup information database is configured to store the technical parameters of the electronic cigarette received by the technical parameters receiving module.

Combined with the fourth embodiment of the second aspect of the preset disclosure, in a fifth embodiment, the system further comprises a mobile terminal;
the technical parameters storing module is configured to store technical parameters of the electronic cigarette;
the technical parameters sending module is configured to send the technical parameters of the electronic cigarette stored in the technical parameters storing module to the mobile terminal;
the mobile terminal is configured to send the technical parameters of the electronic cigarette sent by the technical parameters sending module to the technical parameters receiving module;
the technical parameters receiving module is configured to receive the technical parameters of the electronic cigarette sent by the mobile terminal;
the setup information database is configured to store the technical parameters of the electronic cigarette received by the technical parameters receiving module.

Combined with the second aspect of the preset disclosure, in a six embodiment, the system further comprises a mobile terminal, the cloud server further comprises a technical parameters receiving module, the electronic cigarette further comprises a technical parameters storing module;
the technical parameters storing module is configured to store technical parameters of the electronic cigarette;
the mobile terminal is configured to obtain the technical parameters of the electronic cigarette stored in the technical parameters storing module, and send the obtained technical parameters of the electronic cigarette to the technical parameters receiving module;
the technical parameters receiving module is configured to receive the technical parameters of the electronic cigarette sent by the mobile terminal;
the setup information database is configured to store the technical parameters of the electronic cigarette received by the technical parameters receiving module.

Combined with the sixth embodiment of the second aspect of the preset disclosure, in a seventh embodiment, the electronic cigarette further comprises a technical parameters sending module;
the technical parameters storing module is configured to store technical parameters of the electronic cigarette;
the technical parameters sending module is configured to send a portion of the technical parameters of the electronic cigarette stored in the technical parameters storing module to the mobile terminal;
the mobile terminal is configured to obtain a remaining portion of the technical parameters of the electronic cigarette stored in the technical parameters storing module, combine the obtained portion of the technical parameters and the received portion of the technical parameters from the technical parameters sending module, and send the combined technical parameters of the electronic cigarette to the technical parameters receiving module;
the technical parameters receiving module is configured to receive the combined technical parameters of the electronic cigarette sent by the mobile terminal;
the setup information database is configured to store the combined technical parameters of the electronic cigarette received by the technical parameters receiving module.

Combined with the sixth or seventh embodiment of the second aspect of the preset disclosure, in an eight embodiment, the technical parameters storing module comprises a specification or an identification code, the specification comprises the technical parameters of cigarette butt, atomizer, and battery of the electronic cigarette, the identification code is attached to the electronic cigarette or to an external package or card of the electronic cigarette, the mobile terminal obtains the technical parameters of the electronic cigarette by scanning the identification code or by capturing image of the technical parameters storing module, or by the technical parameters stored in the technical parameters storing module input by voice, video, or by manually input.

In the method and the system for setting up the electronic cigarette of the present disclosure, the electronic cigarette can obtain the information in data packet from the cloud server and automatically set up the electronic cigarette up accordingly. Thus, the setup method for the electronic cigarette is simplified. Furthermore, the cloud server can establish and extend a setup information database based on strong analysis and calculation abilities. The setup information database is capable of being updated and modified, the cloud server can send information as to updates and modifications as data packet to the cloud server in real time. Thus, the user experience can be improved.

### BRIEF DESCRIPTION OF THE DRAWINGS

FIG. 1 is a flowchart of an embodiment of a method for setting up an electronic cigarette according to the present disclosure.
FIG. 2 is a flowchart of a sub-method for establishing a setup information database of the method for setting up the electronic cigarette.
FIG. 3 is a flowchart of another sub-method for establishing a setup information database of the method for setting up the electronic cigarette.
FIG. 4 is a diagrammatic view of an embodiment of a system for setting up an electronic cigarette according to the present disclosure.
FIG. 5 is a block diagram of a cloud server of the system for setting the the electronic cigarette.

Implementations of the present disclosure will now be described, by way of embodiment, with reference to the attached figures.

### DETAILED DESCRIPTION

Numerous specific details are set forth in order to provide a thorough understanding of the embodiments described herein. However, the description is not to be considered as limiting the scope of the embodiments described herein.

Furthermore, the word "device", "component", or "unit", as used hereinafter, is only used to better describe the embodiments described herein but have no specific meanings.

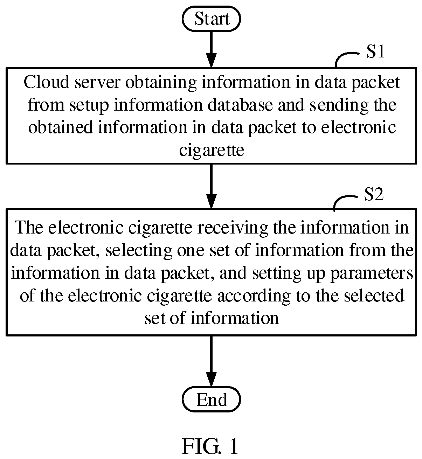

FIG. 1 illustrates an embodiment of a method for setting up an electronic cigarette. The method includes following steps.

S1, the cloud server obtains the information in data packet from the setup information database and sends the obtained information in data packet to the electronic cigarette.

In an embodiment, the information in data packet includes, but is not limited to, the following sets of information for setting up the electronic cigarette.
1) method for setting up technical parameters of a specific tobacco juice, atomizer, and battery of the electronic cigarette, and method for setting up working parameters of the electronic cigarette, and ranking information of the technical parameters and the working parameters.
2) recommendation information or discount information of tobacco juice with same brand and same taste, and atomizer with same brand, same resistance, and same function, and any combination thereof.
3) method for setting up technical parameters of the tobacco juice, the atomizer, and the battery that matches usage habit of the user, and method for setting up working parameters of the electronic cigarette that matches usage habit of the user. The technical parameters and the working parameters are calculated according to the usage habits of the user.

The working parameters of the electronic cigarette include, but are not limited to, working voltage, working power, working temperature, and working duration of the electronic cigarette.

The technical parameters of the tobacco juice include, but are not limited to, brand, model, composition, and taste of the tobacco juice.

The technical parameters of the atomizer include, but are not limited to, brand and model of the atomizer, and electrical resistance value, material, and number of heat generating element(s) in the atomizer.

The technical parameters of the battery include, but are not limited to, brand, model, capacity, type, working temperature, and charging voltage of the battery.

Furthermore, in an embodiment, the obtained information in data packet can be sent to the electronic cigarette through a mobile terminal. The mobile terminal includes, but is not limited to, a smart phone, a smartwatch, a smart wristband, an intelligent television, an intelligent router, a tablet computer, a laptop, and a desktop computer.

S2, the electronic cigarette receives the information in data packet, selects one set of information from the information in data packet, and sets the parameters of the electronic cigarette according to the selected set of information.

The parameters of the electronic cigarette 100 include working parameters and technical parameters. The working parameters include working voltage, working power, working temperature, and working duration of the electronic cigarette 100. The technical parameters include technical parameters of the tobacco juice, atomizer, and battery.

The parameters of the electronic cigarette 100 include, but are not limited to, working parameters and technical parameters. The technical parameters include, but are not limited to, technical parameters of the tobacco juice, atomizer, and battery.

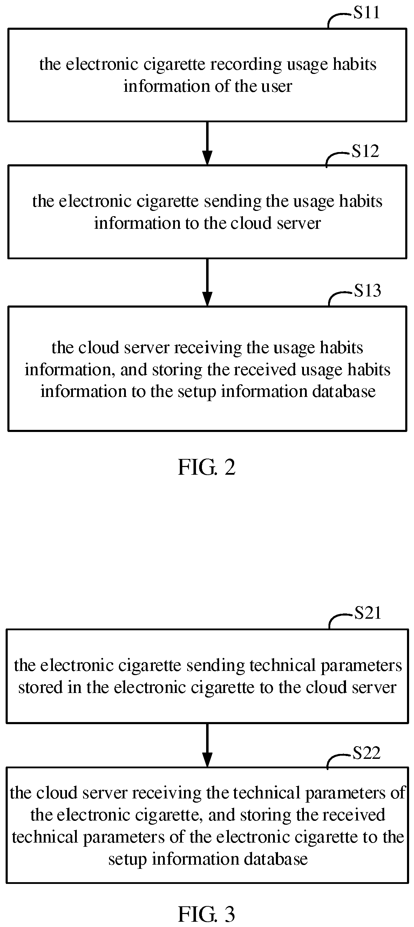

Referring to FIG. 2, in an embodiment, the setup information database can be established by following steps.

S11, the electronic cigarette records usage habits information of the user.

The usage habits information includes a working voltage, a working power, and a working temperature of the electronic cigarette 100 set by the user when using the electronic cigarette, and a number of inhalations when smoking and a duration for smoking every day.

S12, the electronic cigarette sends the usage habits information to the cloud server.

S13, the cloud server receives the usage habits information, and stores the received usage habits information to establish the setup information database.

Furthermore, in an embodiment, the electronic cigarette itself can send the usage habits information to the cloud server, and can also send the usage habits information to the cloud server through the mobile terminal. The mobile terminal includes, but is not limited to, a smart phone, a smartwatch, a smart wristband, an intelligent television, an intelligent router, a tablet computer, a laptop, and a desktop computer.

Thus, the cloud server can receive the usage habits information from the mobile terminal or the electronic cigarette, and stores the received usage habits information from the mobile terminal or the electronic cigarette to establish the setup information database.

Referring to FIG. 3, in another embodiment, the setup information database can be established by following steps.

S21, the electronic cigarette sends the technical parameters stored in the electronic cigarette to the cloud server.

In an embodiment, the technical parameters include technical parameters of the tobacco juice, atomizer, and battery. Specifically, the technical parameters include, but are not limited to, brand, model, composition, and taste of the tobacco juice, brand and model of the atomizer, and electrical resistance value, material, and number of heat generating element(s) in the atomizer, and brand, model, capacity, type, working temperature, and charging voltage of the battery.

S22, the cloud server receives the technical parameters of the electronic cigarette, and stores the received technical parameters of the electronic cigarette to establish the setup information database.

In an embodiment, the electronic cigarette itself can send the technical parameters of the electronic cigarette to the cloud server, and can also send the technical parameters of the electronic cigarette to the cloud server through the mobile terminal. The mobile terminal includes, but is not limited to, a smart phone, a smartwatch, a smart wristband, an intelligent television, an intelligent router, a tablet computer, a laptop, and a desktop computer.

Thus, the cloud server can receive the usage habits information from the mobile terminal or the electronic cigarette, and stores the received usage habits information from the mobile terminal or the electronic cigarette to establish the setup information database.

In the method for setting up the electronic cigarette of the present disclosure, the electronic cigarette can obtain the information in data packet from the cloud server and automatically set up the electronic cigarette up accordingly. Thus, the setup method for the electronic cigarette is simplified. Furthermore, the cloud server can establish and extend a setup information database based on strong analysis and calculation abilities. The setup information database is capable of being updated and modified, the cloud server can send information as to updates and modifications as data packet to the cloud server in real time. Thus, the user experience can be improved.

The present disclosure further provides an embodiment of a system for setting up an electronic cigarette. The system includes an electronic cigarette 100 and a cloud server 200.

The cloud server 200 obtains the information in data packet from setup information database of the cloud server and sends the obtained information in data packet to the electronic cigarette 100.

In an embodiment, the information in data packet includes, but is not limited to, the following sets of information for setting up the electronic cigarette 100.
1) method for setting up technical parameters of a specific tobacco juice, atomizer, and battery of the electronic cigarette 100, method for setting up working parameters of the electronic cigarette 100, and ranking information of the technical parameters and the working parameters.
2) recommendation information or discount information of tobacco juice with same brand and same taste, and atomizer with same brand, same resistance, and same function, and any combination thereof.
3) method for setting up technical parameters of the tobacco juice, the atomizer, and the battery, and working parameters of the electronic cigarette 100, which match usage habit of the user. The technical parameters and the working parameters are calculated according to the usage habits of the user.

The working parameters of the electronic cigarette include, but are not limited to, working voltage, working power, working temperature, and working duration of the electronic cigarette.

The technical parameters of the tobacco juice include, but are not limited to, brand, model, composition, and taste of the tobacco juice.

The technical parameters of the atomizer include, but are not limited to, brand and model of the atomizer, and electrical resistance value, material, and number of heat generating element(s) in the atomizer.

The technical parameters of the battery include, but are not limited to, brand, model, capacity, type, working temperature, and charging voltage of the battery.

In an embodiment, the system further includes a mobile terminal 300. The cloud server 200 can send the information in data packet to the electronic cigarette 100 through the mobile terminal 300. The mobile terminal 300 includes, but is not limited to, a smart phone, a smartwatch, a smart wristband, an intelligent television, an intelligent router, a tablet computer, a laptop, and a desktop computer.

The electronic cigarette 100 receives the information in data packet, selects one set of information from the information in data packet, and sets up the parameters of the electronic cigarette 100 according to the selected set of information.

The parameters of the electronic cigarette 100 include working parameters and technical parameters. The working parameters include working voltage, working power, working temperature, and working duration of the electronic cigarette 100. The technical parameters include technical parameters of the tobacco juice, atomizer, and battery.

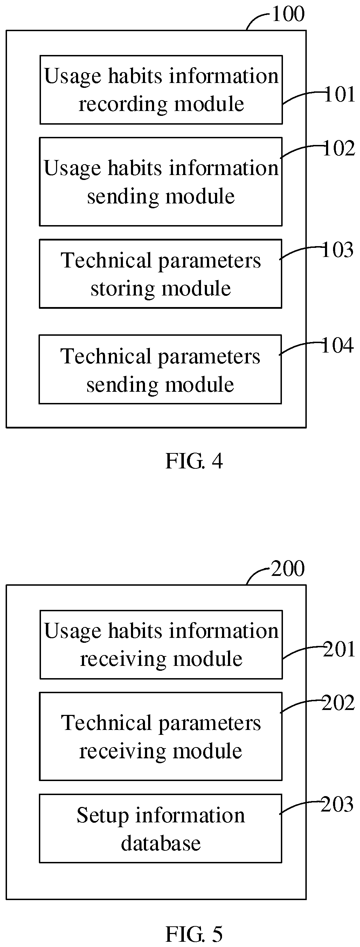

Referring to FIGS. 4 and 5, in an embodiment, the electronic cigarette 100 includes a usage habits information recording module 101 and a usage habits information sending module 102. The cloud server 200 includes a usage habits information receiving module 201 and a setup information database 203.

The usage habits information recording module 101 records usage habits information of the user. The usage habits information includes a working voltage, a working power, and a working temperature of the electronic cigarette 100 set by the user when using the electronic cigarette. The usage habits information also includes the number of inhalations when smoking every day, and a duration for smoking every day.

The usage habits information sending module 102 sends the usage habits information, recorded by the usage habits information recording module 101, to the usage habits information receiving module 201.

The usage habits information receiving module 201 receives the usage habits information from the usage habits information sending module 102.

The setup information database 203 stores the received usage habits information from the usage habits information receiving module 201.

Through the usage habits information recording module 101, the usage habits information sending module 102 and the usage habits information receiving module 201, the cloud server can establish the setup information database 203.

In an embodiment, the system further includes a mobile terminal. The usage habits information sending module 102 sends the usage habits information, recorded by the usage habits information recording module 101, to the usage habits information receiving module 201 through the mobile terminal 300.

Specifically, the usage habits information recording module 101 records usage habits information of the user.

The usage habits information sending module 102 sends the usage habits information, recorded by the usage habits information recording module 101, to the mobile terminal.

The mobile terminal sends the usage habits information sent by the usage habits information sending module 102 to the usage habits information receiving module 201.

The usage habits information receiving module 201 receives the usage habits information from the mobile terminal.

The setup information database 203 stores the received usage habits information from the usage habits information receiving module 201.

The mobile terminal includes, but is not limited to, a smart phone, a smartwatch, a smart wristband, an intelligent television, an intelligent router, a tablet computer, a laptop, and a desktop computer.

Referring to FIGS. 4 and 5, the cloud server can also establish the setup information database 203 by a technical parameters storing module 103, a technical parameters sending module 104 and a technical parameters receiving module 202.

The technical parameters storing module 103 stores the technical parameters of the electronic cigarette 100.

In an embodiment, the technical parameters include technical parameters of the tobacco juice, atomizer, and battery. Specifically, the technical parameters include, but are not limited to, brand, model, composition, and taste of the tobacco juice, brand and model of the atomizer, and electrical resistance value, material, and number of heat generating element(s) in the atomizer, and brand, model, capacity, type, working temperature, and charging voltage of the battery.

The technical parameters sending module 104 sends the technical parameters of the electronic cigarette 100 stored in the technical parameters storing module 103 to the technical parameters receiving module 202.

The technical parameters receiving module 202 receives the technical parameters of the electronic cigarette 100 from the technical parameters sending module 104.

The second controller 203 stores the received technical parameters of the electronic cigarette 100 from the technical parameters sending module 104.

In this embodiment, the electronic cigarette 100 can send the technical parameters of the electronic cigarette 100 to the cloud server 200 through the mobile terminal 300.

Specifically, the technical parameters storing module 103 stores the technical parameters of the electronic cigarette 100.

The technical parameters sending module 104 sends the technical parameters of the electronic cigarette 100 stored in the technical parameters storing module 103 to the mobile terminal.

The mobile terminal sends the technical parameters of the electronic cigarette 100 sent by the technical parameters sending module 104 to the technical parameters receiving module 202.

The technical parameters receiving module 202 receives the technical parameters of the electronic cigarette 100 from the mobile terminal.

The second controller 203 stores the received technical parameters of the electronic cigarette 100 from the technical parameters sending module 104.

The mobile terminal includes, but is not limited to, a smart phone, a smartwatch, a smart wristband, an intelligent television, an intelligent router, a tablet computer, a laptop, and a desktop computer.

In another embodiment, the technical parameters sending module 104 can be omitted if the technical parameters storing module 103 includes a specification and/or an identification code (such as bar codes or QR codes). The specification will include the technical parameters of the cigarette butt, the atomizer, and the battery of the electronic cigarette 100. The identification code can be attached to the electronic cigarette 100 or to an external package or card of the electronic cigarette 100.

Specifically, the technical parameters storing module 103 stores the technical parameters of the electronic cigarette 100.

The mobile terminal obtains the technical parameters of the electronic cigarette 100 stored in the technical parameters storing module 103 and sends the obtained technical parameters of the electronic cigarette 100 to the technical parameters receiving module 202.

The technical parameters receiving module 202 receives the technical parameters of the electronic cigarette 100 from the mobile terminal.

The second controller 203 stores the received technical parameters of the electronic cigarette 100 from the technical parameters sending module 104.

For example, the mobile terminal 300 can obtain the technical parameters of the electronic cigarette 100 by scanning the technical parameters storing module 103 or by capturing image of the technical parameters storing module 103. The mobile terminal 300 can also obtain the technical parameters of the electronic cigarette 100 from the by scanning the identification code or by capturing image of the technical parameters storing module, or by the technical parameters stored in the technical parameters storing module 103 input by voice, video, or input manually.

In other embodiments, it is notable that not all of the technical parameters of the electronic cigarette 100 stored in the technical parameters storing module 103 are obtained by the mobile terminal. The electronic cigarette also includes the technical parameters sending module 104.

Specifically, the technical parameters storing module 103 stores the technical parameters of the electronic cigarette 100.

The technical parameters sending module 104 sends a portion of the technical parameters of the electronic cigarette 100 stored in the technical parameters storing module 103 to the mobile terminal.

The mobile terminal obtains a remaining portion of the technical parameters of the electronic cigarette 100 stored in the technical parameters storing module 103, combines the obtained technical parameters of the electronic cigarette 100 and the received technical parameters and the obtained technical parameters from the technical parameters sending module 104, and sends the combined technical parameters of the electronic cigarette 100 to the technical parameters receiving module 202.

The technical parameters receiving module 202 receives the combined technical parameters of the electronic cigarette 100 from the mobile terminal.

The second controller 203 stores the combined technical parameters of the electronic cigarette 100 received by the technical parameters sending module 104.

In the system for setting up the electronic cigarette of the present disclosure, the electronic cigarette can obtain the information in data packet from the cloud server and automatically set up the electronic cigarette up accordingly. Thus, the setup method for the electronic cigarette is simplified. Furthermore, the cloud server can establish and extend a setup information database based on strong analysis and calculation abilities. The setup information database is capable of being updated and modified, the cloud server can send information as to updates and modifications as data packet to the cloud server in real time. Thus, the user experience can be improved.

The term "comprising," when utilized, means "including, but not necessarily limited to"; it specifically indicates open-ended inclusion or membership in the so-described combination, group, series, and the like.

The embodiments shown and described above are only examples. Therefore, many commonly-known features and details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims. It will, therefore, be appreciated that the embodiments described above may be modified within the scope of the claims.

## Claims

1. A method for setting up electronic cigarette, the method comprising:
S1, the cloud server obtaining an information in data packet from a setup information database, and sending the obtained information in data packet to the electronic cigarette; and
S2, the electronic cigarette receiving the information in data packet, selecting one set of information from the information in data packet, and setting parameters of the electronic cigarette according to the selected set of information.

2. The method for setting up electronic cigarette of claim 1, wherein in S1, the cloud server sending the obtained information in data packet to the electronic cigarette comprises:
the cloud server sending the obtained information in data packet to the electronic cigarette through a mobile terminal.

3. The method for setting up electronic cigarette of claim 1, wherein the setup information database is established by steps comprising:
S11, the electronic cigarette recording usage habits information;
S12, the electronic cigarette sending the usage habits information to the cloud server;
S13, the cloud server receiving the usage habits information, and storing the received usage habits information to the setup information database.

4. The method for setting up electronic cigarette of claim 3, wherein in S12, the electronic cigarette itself sends the usage habits information to the cloud server, or sends the usage habits information to the cloud server through a mobile terminal.

5. The method for setting up electronic cigarette of claim 1, wherein the setup information database is established by steps comprising:
S21, the electronic cigarette sending technical parameters stored in the electronic cigarette to the cloud server;
S22, the cloud server receiving the technical parameters of the electronic cigarette, and storing the received technical parameters of the electronic cigarette to the setup information database.

6. The method for setting up electronic cigarette of claim 5, wherein in S21, the electronic cigarette itself sends the technical parameters to the cloud server, or sends the technical parameters to the cloud server through a mobile terminal.

7. A system for setting up electronic cigarette, comprising:
a cloud server comprising a setup information database storing an information in data packet, the cloud server configured to obtain the information in data packet from the setup information database, and send the obtained information in data packet to the electronic cigarette; and
an electronic cigarette configured to obtain the information in data packet from the cloud server, select one set of information from the information in data packet, and set parameters of the electronic cigarette according to the selected set of information.

8. The system for setting up electronic cigarette of claim 7, further comprising a mobile terminal, wherein the cloud server is configured to send the obtained information in data packet to the electronic cigarette through the mobile terminal.

9. The system for setting up electronic cigarette of claim 7, wherein the cloud server comprises a usage habits information receiving module, the electronic cigarette further comprises a usage habits information recording module and a usage habits information sending module;
the usage habits information recording module is configured to record usage habits information of a user;
the usage habits information sending module is configured to send the usage habits information recorded by the usage habits information recording module to the usage habits information receiving module;
the usage habits information receiving module is configured to receive the usage habits information from the usage habits information sending module;
the setup information database is configured to store the received usage habits information received by the usage habits information receiving module.

10. The system for setting up electronic cigarette of claim 9, further comprising a mobile terminal, wherein:
the usage habits information recording module is configured to record usage habits information of a user;
the usage habits information sending module is configured to send the usage habits information recorded by the usage habits information recording module to the mobile terminal;
the mobile terminal is configured to send the usage habits information sent by the usage habits information sending module to the usage habits information receiving module;
the usage habits information receiving module is configured to receive the usage habits information from the mobile terminal;
the setup information database is configured to store the received usage habits information received by the usage habits information receiving module.

11. The system for setting up electronic cigarette of claim 7, wherein the cloud server further comprises a technical parameters receiving module, the electronic cigarette further comprises a technical parameters storing module and a technical parameters sending module;
the technical parameters storing module is configured to store technical parameters of the electronic cigarette;
the technical parameters sending module is configured to send the technical parameters of the electronic cigarette stored in the technical parameters storing module to the technical parameters receiving module;
the technical parameters receiving module is configured to receive the technical parameters of the electronic cigarette sent by the technical parameters sending module;
the setup information database is configured to store the technical parameters of the electronic cigarette received by the technical parameters receiving module.

12. The system for setting up electronic cigarette of claim 11, further comprising a mobile terminal, wherein:
the technical parameters storing module is configured to store technical parameters of the electronic cigarette;
the technical parameters sending module is configured to send the technical parameters of the electronic cigarette stored in the technical parameters storing module to the mobile terminal;
the mobile terminal is configured to send the technical parameters of the electronic cigarette sent by the technical parameters sending module to the technical parameters receiving module;
the technical parameters receiving module is configured to receive the technical parameters of the electronic cigarette sent by the mobile terminal
the setup information database is configured to store the technical parameters of the electronic cigarette received by the technical parameters receiving module.

13. The system for setting up electronic cigarette of claim 7, further comprising a mobile terminal, wherein the cloud server further comprises a technical parameters receiving module, the electronic cigarette further comprises a technical parameters storing module;
the technical parameters storing module is configured to store technical parameters of the electronic cigarette;
the mobile terminal is configured to obtain the technical parameters of the electronic cigarette stored in the technical parameters storing module, and send the obtained technical parameters of the electronic cigarette to the technical parameters receiving module;
the technical parameters receiving module is configured to receive the technical parameters of the electronic cigarette sent by the mobile terminal;
the setup information database is configured to store the technical parameters of the electronic cigarette received by the technical parameters receiving module.

14. The system for setting up electronic cigarette of claim 13, wherein the electronic cigarette further comprises a technical parameters sending module;
the technical parameters storing module is configured to store technical parameters of the electronic cigarette;
the technical parameters sending module is configured to send a portion of the technical parameters of the electronic cigarette stored in the technical parameters storing module to the mobile terminal;
the mobile terminal is configured to obtain a remaining portion of the technical parameters of the electronic cigarette stored in the technical parameters storing module, combine the obtained portion of the technical parameters and the received portion of the technical parameters from the technical parameters sending module, and send the combined technical parameters of the electronic cigarette to the technical parameters receiving module;
the technical parameters receiving module is configured to receive the combined technical parameters of the electronic cigarette sent by the mobile terminal;
the setup information database is configured to store the combined technical parameters of the electronic cigarette received by the technical parameters receiving module.

15. The system for setting up electronic cigarette of claim 13 or 14, wherein the technical parameters storing module comprises a specification or an identification code, the specification comprises the technical parameters of cigarette butt, atomizer, and battery of the electronic cigarette, the identification code is attached to the electronic cigarette or to an external package or card of the electronic cigarette, the mobile terminal obtains the technical parameters of the electronic cigarette by scanning the identification code or by capturing image of the technical parameters storing module, or by the technical parameters stored in the technical parameters storing module input by voice, video, or by manually input.
